# EUROPEAN PATENT APPLICATION

(11) **EP 1 191 737 A2**
(43) Date of publication of application: **27.03.2002**
(21) Application number: 01122188.4
(22) Date of filing: 17.09.2001
(51) Int. Cl.: H04L 9/06

(54) **Data encryption apparatus**

(30) Priority: 22.09.2000 GB 0023409
(71) Applicant: Amphion Semiconductor Limited, Belfast BT9 5BS (GB)
(72) Inventor: McLoone, Maire Patricia, Cornagrilla, Glenties, County Donegal (IE); McCanny, John Vincent, County Down, Nothern Ireland (GB)
(74) Representative: O'Connell, Maura, Dr.

(57) **Abstract**

A data encryption or decryption apparatus for encrypting or decrypting blocks of data. The apparatus includes a data processing pipeline having at least two pipelined data processing modules each arranged to perform an encryption or decryption operation, in conjunction with a respective sub-key. The apparatus further includes a sub-key generating module for generating a respective sub-key for each data processing module and a sub-key skewing module arranged to provide each sub-key to its respective data processing module. The arrangement is such that the sub-key skewing module synchronises the provision of each sub-key to its respective data processing module with the passage of a data block through the data processing pipeline so that the data block is encrypted or decrypted using sub-keys generated from a common primary key. The apparatus is particularly suitable for use in the implementation of the Data Encryption Standard (DES).

## Description

### FIELD OF THE INVENTION

The present invention relates to the field of data encryption. The invention relates particularly to the provision of encryption or decryption keys in a private key, or symmetric key, encryption or decryption apparatus.

### BACKGROUND TO THE INVENTION

Secure or private communication, particularly over a telephone network or a computer network, is dependent on the encryption, or enciphering, of the data to be transmitted. One type of data encryption, commonly known as private key encryption or symmetric key encryption, involves the use of a cipher key, in the form of a pseudo-random number, or code, to encrypt data in accordance with a selected data encryption algorithm (DEA). To decipher the encrypted data, a receiver must know and use the same key in conjunction with the inverse of the selected encryption algorithm. Thus, anyone who receives or intercepts an encrypted message cannot decipher it without knowing the key. Data encryption is used in a wide range of applications including IPSec Protocols, ATM Cell Encryption, the Secure Socket Layer (SSL) protocol and Access Systems for Terrestrial Broadcast.

The Data Encryption Standard (DES) is an example of a private key data encryption algorithm. DES is well known encryption algorithm and is specified in a number of references including the United States Federal Information Processing Standard (FIPS) 46 and 81 standards and the American National Standard for Information (ANSI) X3.92 and X3.106 standards, which are hereby incorporated by reference.

In accordance with many DEAs, including DES, encryption is performed in multiple stages, commonly known as rounds. Such algorithms lend themselves to implementation using a data processing pipeline, or pipelined architecture. In a pipelined architecture, a respective data processing module is provided for each round, the data processing modules being arranged in series. A message to be encrypted is typically split up into data blocks that are fed in series into the pipeline of data processing modules. Each data block passes through each processing module in turn, the processing modules each performing an encryption (or decryption) operation, or function, on each data block. Thus, at any given moment, a plurality of data blocks may be simultaneously processed by a respective processing module - this enables the message to be encrypted (and decrypted) at relatively fast rates.

Each processing module uses a respective sub-key to perform its encryption operation, each sub-key being derived from the original pseudo-random key (hereinafter referred to as the primary key). Conventionally, each processing module generates its respective sub-key by performing a logical operation on the primary key. Thus, the primary key is carried through the pipeline architecture from one processing module to the next.

A problem with this conventional arrangement is that, in order to perform the required logical operation on the key, each processing module is provided with a logic module, or circuitry, (hereinafter referred to as 'logic'). It is found that the inclusion of the logic adds significantly to the overall processing time of the pipeline architecture, not least because each processing module has to recalculate its sub-key every clock cycle. In other conventional implementations, the sub-keys are pre-computed outside of the processing modules. Such implementations suffer in that relatively complicated switches are used to provide sub-keys to the appropriate processing modules and in that they do not support the use of a different cipher key in consecutive clock cycles.

### SUMMARY OF THE INVENTION

A first aspect of the present invention provides a data encryption or decryption apparatus for encrypting or decrypting blocks of data, the data encryption apparatus comprising: a data processing pipeline having at least two pipelined data processing modules each arranged to perform an encryption or decryption operation, in conjunction with a respective sub-key, on each data block input thereto; a sub-key generating module arranged to receive a primary key and to generate from said primary key a respective sub-key for each data processing module; a sub-key skewing module arranged to receive said sub-keys and to provide each sub-key to its respective data processing module, wherein the sub-key skewing module is arranged to synchronise the provision of each sub-key to its respective data processing module with the passage of a data block through the data processing pipeline so that the data block is encrypted or decrypted using sub-keys generated from a common primary key.

Preferably, the sub-key skewing module comprises an array of delay elements arranged to delay the provision of the sub-keys to a respective processing module by an amount corresponding to the delay encountered by a data block in reaching each respective processing module. For the first processing module in the data processing pipeline, the delay may be zero. More preferably, the sub-key skewing module defines a respective data path for each sub-key, by which the respective sub-keys are provided to a respective processing module, wherein each data path includes a set of delay elements, the number of delay elements in the set corresponding with the number of data processing modules which precede the respective data processing module in the data processing pipeline. Preferably, each delay element comprises a data latch.

Preferably, the sub-key generating module includes a respective hardwired circuit for generating each sub-key, each hardwired circuit being arranged to rearrange the order of at least some of the bits of the primary key to produce a respective primary key. Preferably, the data processing modules are arranged to perform encryption or decryption operations, and the sub-key generating module is arranged to generates sub-keys, in accordance with the Data Encryption Standard (DES).

A second aspect of the invention provides a method of encrypting or decrypting blocks of data in a data encryption apparatus comprising a data processing pipeline having at least two pipelined data processing modules each arranged to perform an encryption or decryption operation, in conjunction with a respective sub-key, on each data block input thereto, the method comprising generating from said primary key a respective sub-key for each data processing block; providing each sub-key to its respective data processing module; and arranging to synchronise the provision of each sub-key to its respective data processing module with the passage of a data block through the data processing pipeline so that the data block is encrypted using sub-keys generated from a common primary key.

The apparatus of the invention may be implemented in a number of conventional ways, for example as an Application Specific Integrated Circuit (ASIC) or a Field Programmable Gate Array (FPGA). The implementation process may also be one of many conventional design methods including standard cell design or schematic entry/layout synthesis. Alternatively, the apparatus may be described, or defined, using a hardware description language (HDL) such as VHDL, Verilog HDL or a targeted netlist format (e.g. xnf, EDIF or the like) recorded in an electronic file, or computer useable file. Thus, the invention further provides a computer program, or computer program product, comprising program instructions, or computer usable instructions, arranged to generate, in whole or in part, a apparatus according to the first aspect of the invention. The apparatus may therefore be implemented as a set of suitable such computer programs. Typically, the computer program comprises computer usable statements or instructions written in a hardware description, or definition, language (HDL) such as VHDL, Verilog HDL or a targeted netlist format (e.g. xnf, EDIF or the like) and recorded in an electronic or computer usable file which, when synthesised on appropriate hardware synthesis tools, generates semiconductor chip data, such as mask definitions or other chip design information, for generating a semiconductor chip. The invention also provides said computer program stored on a computer useable medium. The invention further provides semiconductor chip data, stored on a computer usable medium, arranged to generate, in whole or in part, a apparatus according to the first aspect of the invention.

Hence, a third aspect of the invention provides a computer usable product comprising computer usable instructions arranged to generate, when synthesised using hardware synthesis tools, a data encryption or decryption apparatus according to the first aspect of the invention.

A fourth aspect of the invention provides a computer program product comprising computer usable instructions arranged to generate, when synthesised using hardware synthesis tools, a data encryption or decryption apparatus for encrypting or decrypting blocks of data, the computer program product comprising computer usable instructions for generating: a data processing pipeline having at least two pipelined data processing modules each arranged to perform an encryption or decryption operation, in conjunction with a respective sub-key, on each data block input thereto; a sub-key generating module arranged to receive a primary key and to generate from said primary key a respective sub-key for each data processing module; and a sub-key skewing module arranged to receive said sub-keys and to provide each sub-key to its respective data processing module, and further comprising computer usable instructions for linking said data processing pipeline, said sub-key generating module and said sub-key skewing module so that the sub-key skewing module is arranged to synchronise the provision of each sub-key to its respective data processing module with the passage of a data block through the data processing pipeline so that the data block is encrypted or decrypted using sub-keys generated from a common primary key.

Preferably, the computer usable instructions for generating the sub-key skewing module include a first component comprising computer usable instructions for generating a series of data latches, the number of latches in the series depending on the value of a first parameter; and a second component arranged to instantiate said first component a plurality of times, the number of times depending on the value of said first parameter, wherein the value of the first parameter is determined by the number of data processing modules in the data processing pipeline.

The present invention significantly increases the processing speed of data encryption/decryption apparatus in comparison with conventional apparatus. Moreover, apparatus produced in accordance with the invention are able to support the use of different cipher keys in consecutive clock cycles. This improves the level of security provided by the apparatus.

### BRIEF DESCRIPTION OF THE DRAWINGS

An embodiment of the invention is now described by way of example and with reference to the accompanying drawings in which :
**Figure 1** is a schematic view of a data encryption algorithm shown in a pipelined form;
**Figure 2** is a schematic view of the DES encryption algorithm shown in a pipelined form;
**Figure 3** is a schematic view of a data encryption apparatus according to the present invention;
**Figure 4** is a schematic view of a processing module for use in the apparatus of Figure 3 when implementing the DES algorithm;
**Figures 5 and 6** show VHDL code for generating a component of the apparatus of Figure 3;
**Figure 7a** illustrates an instantiation of a latch component and VHDL code for generating the latch component;
**Figure 7b** illustrates a latch component generated when parameter *depth =* 0 ;
**Figure 7c** illustrates three latch components generated when parameter *depth* = 2;
**Figure 8a** illustrates an array of one latch generated when parameter *I* = 0;
**Figure 8b** illustrates an array of three latches generated when parameter *I* = 2*;* and
**Figure 9** illustrates arrays of latches generated by the component defined in the VHDL code of Figures 5 and 6.

### DETAILED DESCRIPTION OF THE DRAWINGS

Many data encryption algorithms process input data in multiple stages or rounds, wherein each stage or round involves an encryption (or decryption) operation being performed on the data. An algorithm with such a multi-stage, or multi-round, structure lends itself to implementation using a data processing pipeline, or pipeline architecture.

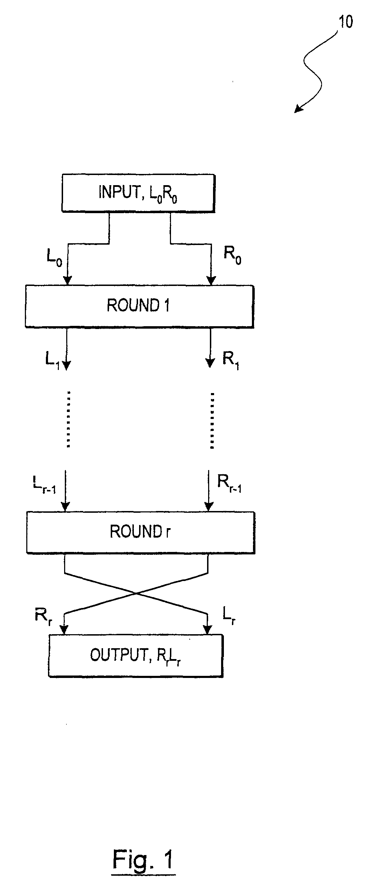

Referring now to Figure 1 of the drawings there is shown, generally indicated at 10, a schematic view of a data encryption algorithm shown in pipelined form. The general structure illustrated in Figure 1 is known as a fiestel structure, and an algorithm which exhibits this structure is commonly known as a fiestel cipher. In general, a fiestel cipher is an iterated, or multi-stage, algorithm that maps a 2*t*-bit input data block of plaintext (L₀R₀) to an encrypted output data block of ciphertext (RᵣLᵣ) through an r-round encryption process, where *r* is greater than or equal to 1. The input data block L₀R₀ is split into two *t*-bit sub-blocks, L₀ and R₀, which are subjected to an encryption operation in accordance with the first stage of the algorithm, round 1. The round 1 encryption operation produces outputs L₁ and R₁ that are then supplied to the next stage of the algorithm, round 2 (not shown), where a further encryption operation is performed. The process repeats until round r of the algorithm performs an encryption operation on Lᵣ₋₁ and Rᵣ₋₁ to produce Lᵣ and Rᵣ. Typically, these outputs are interchanged before concatenation to produce the encrypted output data block RᵣLᵣ.

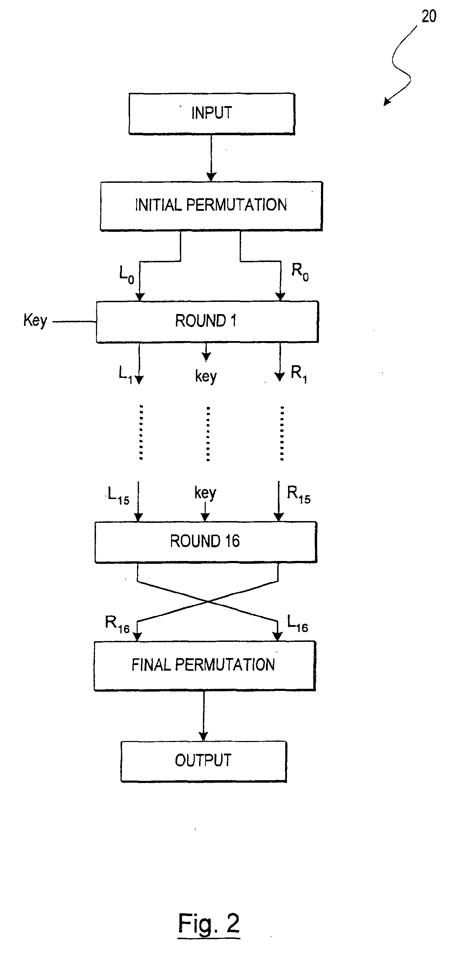

The Data Encryption Standard (DES) is an example of a fiestel cipher. Figure 2 is a schematic view of the DES data encryption algorithm, generally indicated at 20, shown in a pipelined arrangement. The DES algorithm is a block cipher that operates on 64-bit input data blocks of plaintext. Each input data block INPUT undergoes an initial permutation (as defined in the above-referenced DES specifications) before being split into a left sub-block L₀ and a right sub-block R₀. The DES algorithm 20 has 16 rounds (only round 1 and round 16 shown in Figure 2), an encryption operation being performed on the data sub-blocks in each round. After the sixteenth round, the data sub-blocks are interchanged, concatenated and then undergo a final permutation, which is the inverse of the initial permutation, to produce an encrypted output data block OUTPUT. The initial permutation, the encryption operations and the final permutation are each defined in the DES specifications.

The DES algorithm is a private key, or symmetric key, encryption algorithm. Each round uses a respective sub-key to encrypt the data input thereto. Each sub-key is generated from a common cipher, or primary key (shown as *Key* in Figure 2). Conventionally, the primary key *Key* is supplied to the round 1 stage of the pipeline, at which stage a first sub-key *Sub-key* 1 is generated by permutation of said primary key for use in the round 1 encryption process. The primary key is then forwarded to the round 2 stage of the pipeline whereupon a second sub-key *Sub-key* 2 is generated, by permutation of the primary key, for use in the round 2 encryption process. In this way, the primary key is carried through the pipeline from one stage to the next. Thus, to implement each round, respective permutation logic - typically in the form of shift registers (not shown) - is required. The operation of the permutation logic is relatively slow and is considered to slow significantly the overall speed of an encryption apparatus. As outlined above, a message encrypted using a primary key can only be decrypted by a receiver (not shown) who knows and uses the same primary key in conjunction with the inverse of the encryption algorithm.

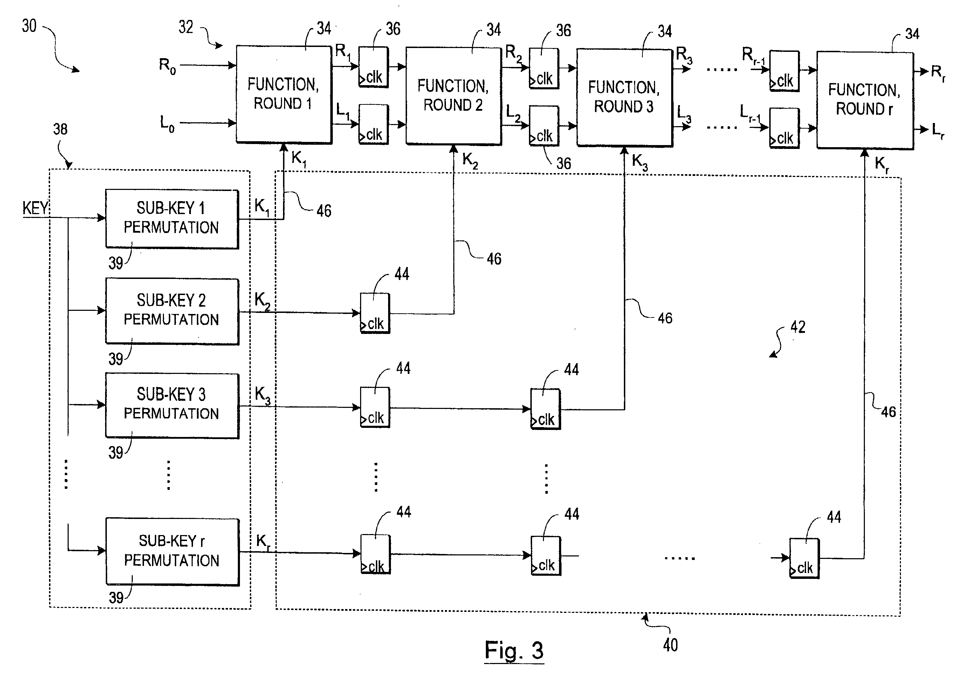

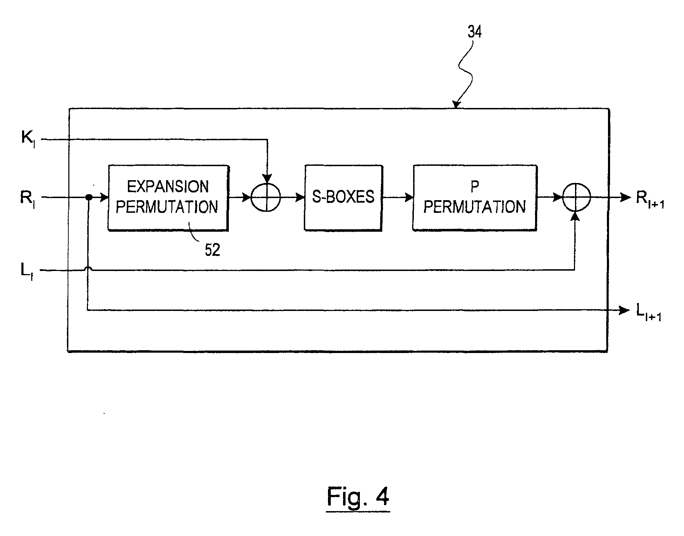

The generation and use of the sub-keys in accordance with the present invention is described in more detail with reference to Figures 3 and 4. With reference now to Figure 3, there is shown, generally indicated at 30, a data encryption apparatus according to the invention. The data encryption apparatus 30 comprises a data processing pipeline 32 having at least two pipelined data processing modules 34. Pipelining is well known - a typical pipeline processor (not shown) comprises a plurality of pipeline stages coupled together in series. Each pipeline stage includes a set of one or more data latches and a processing module. Data to be processed is sequentially shifted along the pipeline via the respective latch set during predetermined pipeline cycles, or clock cycles.

In general, the data processing pipeline 32 has r data processing modules 34, where r is the number of rounds in the data encryption algorithm being implemented by the apparatus 30. In the case of the DES algorithm, r=16 and so the apparatus comprises 16 data processing modules 34.

In the embodiment shown in Figure 3, the data processing pipeline 32 is arranged to implement a fiestel-structured algorithm. Hence, each data processing module 34 is arranged to receive, and operate on, respective left and right data sub-blocks L_{I} and R_{I}, where I=0 to r-1. In alternative embodiments (not illustrated) each processing module may in general be arranged to receive, and to operate on, one or more input data blocks or sub-blocks at a time, depending on the algorithm being implemented. In the implementation of the DES algorithm, the initial permutation operation and the splitting of the input data block into left and right sub-blocks L₀, R₀ is performed in conventional manner and is not illustrated in Figure 3 for reasons of clarity. For the same reasons, the final permutation operation and concatenation of the sub-blocks are not shown in Figure 3.

A set of one or more delay elements in the form of data latches 36 (or alternatively data registers or flip-flops) are provided between each adjacent data processing module 34 to control the flow of data through the pipeline 32. Each latch 36 has a clock cycle input *clk* upon activation of which data present at the latch input is transferred to the latch output. In the embodiment of Figure 3, a respective latch 36 is provided between adjacent processing modules 34 for each of the left and right hand data sub-blocks L_{I}, R_{I}. In alternative embodiments (not shown) the number of required latches depends on how data is transferred between adjacent processing modules - for example, when implementing an algorithm in which a single data block (rather than two data sub-blocks) is passed between adjacent processing modules, only one latch is required between adjacent processing modules.

Each data processing module 34 is arranged to perform an encryption operation on each data block, or sub-block, input thereto. The encryption operation, which is described in more detail with reference to Figure 4, is performed in conjunction with a respective sub-key K₁...Kᵣ. Thus, each data processing module 34 needs to be provided with a respective sub-key. In a conventional pipelined implementation of the DES encryption algorithm (not shown), the primary key is provided to the round 1 processing module of the data processing pipeline where it undergoes a logic permutation operation to produce a first sub-key K₁ Sub-key K₁ is used in the encryption operation performed in round 1. The primary key is then carried through to the round 2 stage of the processing pipeline where it undergoes a logic permutation to produce the second sub-key K₂. This process repeats for all 16 rounds. The disadvantages of this arrangement are outlined above.

In accordance with the present invention, the sub-keys K₁...Kᵣ are pre-computed, or pre-determined, by the encryption apparatus 30 and are then each provided as an input to a respective data processing module 34. Further, the apparatus 30 of the invention controls the time at which each sub-key K₁...Kᵣ is provided to its respective processing module 34 so that the availability of the sub-keys to the processing modules is synchronised with the flow of data through the data processing pipeline 32. In the preferred embodiment this is used to ensure that a data block (not shown) which passes through the data processing pipeline 32 is encrypted using sub-keys that are derived from a common primary key. This arrangement enables the apparatus 30 to use a different primary key in each successive clock cycle (i.e. for each successive input data block), if desired.

Thus, the apparatus 30 includes a sub-key generating module 38 arranged to receive a primary key KEY and to generate, or derive, from the primary key KEY a respective sub-key K₁...Kᵣ for each data processing block 34. The sub-key generating module comprises a plurality of permutation modules 39, one for each sub-key K₁...Kᵣ, each of which generates a respective sub-key by performing a respective permutation operation the primary key KEY. In the case of DES, each permutation operation involves rearranging the order of the elements of the primary key KEY in accordance with a respective pre-determined permutation pattern (which, for DES, are obtained from the DES specification). In the case of implementing the DES algorithm, the primary key comprises 64 bits while each sub-key comprises 48 bits, the respective mappings between the primary key and the sub-keys being defined in the DES specifications. For example, to derive the first sub-key K₁, bit 10 of the primary key becomes bit 1 of sub-key K₁, bit 51 of the primary key becomes bit 2 of sub-key K₁, and so on. The 16 primary key bits that are omitted from each sub-key are also determined by the DES specifications and may differ from sub-key to sub-key.

In the preferred embodiment of the invention, the permutation modules 39 each comprise a respective hardwired circuit (not illustrated) that maps, or rearranges, each of a plurality of parallel data inputs (only one input line shown per module 39) to a respective data output (only one shown) in accordance with the permutation operation to be performed by that permutation module 39. Thus, the primary key KEY is conveniently provided to each permutation module 39 in bit-parallel form and the respective sub-keys K₁...Kᵣ are generated in bit-parallel form. It will be understood that, for DEAs other than DES, alternative permutation operations or logic operations may be performed by the permutation modules.

As the implementation of the sub-key generating module 38 is hardwired, no logic is required. This arrangement speeds up the performance of the apparatus 30. In alternative embodiments of the invention (not illustrated) where the encryption/decryption algorithm being implemented calls for logical operations in generating sub-keys from the primary key, the sub-key generating module 38 may include appropriate logic circuitry. The resulting encryption/decryption apparatus would still process data at a relatively fast rate since the logical circuitry is present only in the sub-key generating module and is not repeated in each of the data processing modules.

The apparatus 30 further includes a sub-key skewing module 40 arranged to receive the sub-keys K₁...Kᵣ generated by the sub-key generating module 38 and to provide them to a respective data processing module 34. The sub-key skewing module 40 is further arranged to control the timing of the provision of each sub-key K₁...Kᵣ to the respective processing module 34. The arrangement is such that the passage of the sub-keys K₁...Kᵣ through the sub-key skewing module 40 is synchronised with the passage of data through the data pipeline 32. For a given data block (which in the DES algorithm implementation comprises the left and right sub-blocks L₀, R₀) input at the first (round 1) data processing module 34, the sub-key skewing module 40 provides each current sub-key K₁...Kᵣ to its respective data processing module 34 at substantially the same time (or in the same clock cycle) as the data block reaches the respective data processing modules 34. The current sub-keys K₁...Kᵣ are those which are derived from the primary key KEY that is provided to the apparatus 30 for use with said given data block. It will be appreciated that this arrangement enables a different primary key to be used in each clock cycle and therefore for each input data block. This increases the security of the data encryption.

In the preferred embodiment, the sub-key skewing module 40 comprises an array 42 of data latch means, or data latches 44, in the form of, for example, D-flipflops or the like, which are operable by the clock signal *CLK.* The data latch array 42 is arranged to delay the provision of the sub-keys K₁...Kᵣ to their respective processing modules 34 by an amount corresponding to the delay encountered by a data block in reaching each respective processing module 34. Thus, for each sub-key K₁...Kᵣ, the sub-key skewing module 40 defines a respective data path 46, or data line, by which the sub-keys are provided to the respective processing module 34, wherein each data path, or data line, includes a set or series of data latches 44, the number of latches 44 in the set depending on the number of data processing modules 34 (or sets of pipeline latches 36) which precede the respective processing modules 34. In Figure 3, the data inputs and outputs of the latches 44 are shown as single lines which, in the preferred embodiment, represent multi-bit parallel inputs/outputs. In the case of DES, the data inputs/outputs are 48-bits in parallel. In the embodiment shown in Figure 3, there are no pipeline latches 36 preceding the round 1 processing module 34 and so no skewing latches 44 are required in the data line 46 for sub-key K₁ i.e. the set of data latches 44 may be a null set. The round 2 processing module 34 is preceded by one set of pipeline latches 36 and so one skewing latch 44 is provided in the data line for sub-key K₂, and so on.

With reference to Figure 4, configuration of the data processing modules 34 is now described in the context of the implementation of the DES algorithm. Figure 4 shows a generic representation of the data processing module 34 arranged to receive a sub-key K_{I}, and left and right data sub-blocks L_{I+1}, R_{I+1}, and to produce processed, or part-encrypted, left and right data sub-blocks L_{I}, R_{I}. In accordance with the DES algorithm, the right data sub-block R_{I} undergoes an Expansion Permutation at sub-module 52. The Expansion Permutation rearranges the 32 bits of R_{I} and repeats specified bits to produce a 48-bit output which then undergoes an XOR operation with the 48-bit sub-key K_{I}. The result of the XOR operation is fed into eight substitution boxes (shown as one unit S-BOXES), which transform the 48-bit input into a 32-bit output. Each substitution box is a look-up table with a 6-bit input and a 4-bit output. Hence the 48-bit result from the XOR operation is divided into eight 6-bit blocks and each of these is operated on by a respective substitution box. Each 6-bit block serves as an address for the respective substitution box look-up table and each substitution box produces a 4-bit output from the indicated address. The respective outputs from each substitution box are concatenated to obtain a 32-bit result that is then operated on by a permutation sub-module 54 which performs a permutation (commonly known as a P Permutation). The result of the P Permutation undergoes an XOR operation with the left data sub-block L_{I} to produce the next right data sub-block R_{I+1}. The right data sub-block R_{I} becomes the next left data sub-block L_{I+1}. The Expansion Permutation, the substitution boxes and the P Permutation are each well known and are defined in the DES specifications. It will be apparent that the present invention is not limited to use with the specific data processing module 34 described with reference to Figure 4 which is particular to the DES algorithm and is given by way of example only.

In order to decrypt a message, a data decryption apparatus (not shown) is used. The data decryption apparatus is arranged to perform the inverse of the relevant encryption algorithm and is substantially similar in construction to the encryption apparatus 30. However, the sub-keys K₁...Kᵣ are used in reverse order i.e. sub-key Kᵣ is used in conjunction with the round 1 processing module, sub-key Kᵣ₋₁ is used in conjunction with the round 2 processing module, and so on. It will be understood that the invention applies equally to data encryption apparatus.

The data encryption apparatus 30 may be implemented in a number of conventional ways, for example as an Application Specific Integrated Circuit (ASIC) or a Field Programmable Gate Array (FPGA). The implementation process may also be one of many conventional design methods including standard cell design or schematic entry/layout synthesis. Preferably, however, the apparatus 30 is described, or defined, using a hardware description language (HDL) such as VHDL, Verilog HDL or a targeted netlist format (e.g. xnf, EDIF or the like) in an electronic file, or computer useable file or computer program product, and implemented, or synthesised using an appropriate conventional design synthesis tool (not shown). Typically, an HDL, or equivalent, file comprises computer usable statements or instructions which, when synthesised, generate and link hardware components.

Capturing the apparatus 30 using an HDL, or equivalent format, is advantageous as it allows the apparatus 30 to be stored in a component library for re-use. A further advantage of using an HDL is that it allows at least part of the apparatus 30 to be parameterised so that it may be adapted for use in different applications. This is particularly true for the sub-key skewing module 40.
There is now described an implementation of the sub-key skewing module 40 in an HDL (VHDL in the present embodiment) where the module is adaptable to generate an data latch array the size of which depends on the value of a parameter I which represents the number of rounds in the data encryption algorithm being implemented.

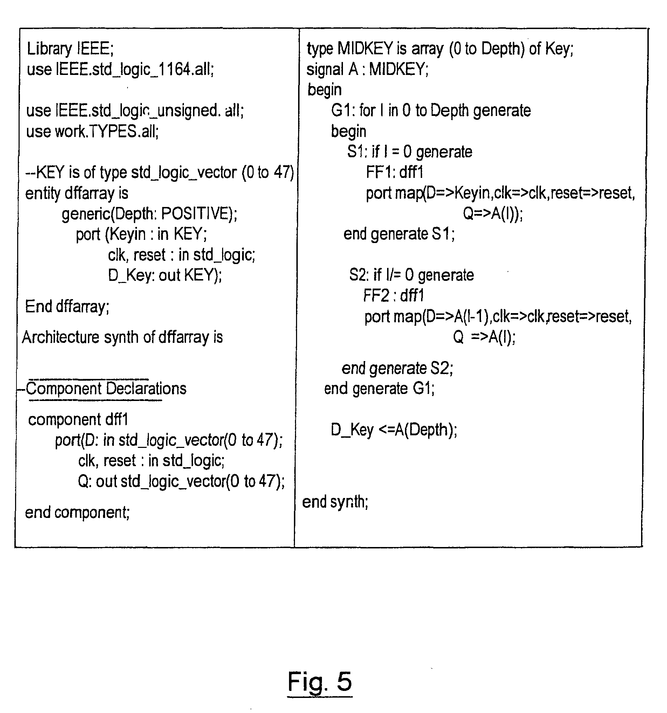

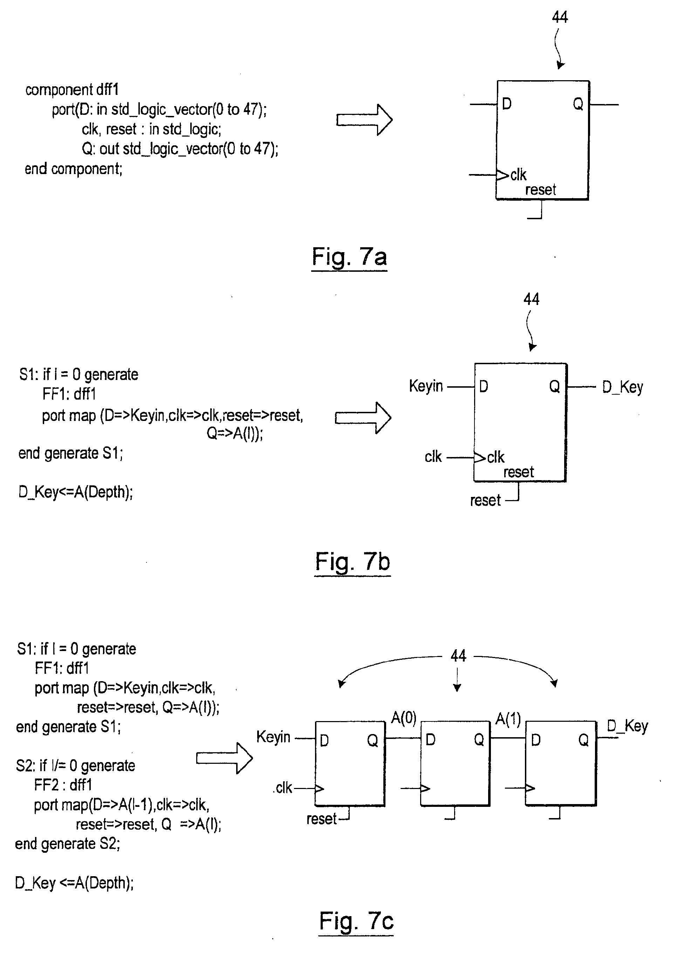

The VHDL module comprises two components referred to herein as *Dffarray* and *Skew.* Suitable code for *Dffarray* is given in Figure 5. The *Dffarray* component generates a series of one or more latches (D-flipflops in the present example). Initially *Dffarray* instantiates a latch component. This is illustrated in Figure 7a which shows the portion of *Dffarray* that instantiates the latch and a schematic representation of the latch 44 itself. The latch 44 is conventional and has a data input *D,* a data output *Q* and clock and reset inputs *clk, reset.*

A generate statement is then used to create a series of latches. A generic parameter *Depth* indicates the desired length of the array (sequence). If *Depth* = 0, a process, S1, is used to create one latch in the array and the inputs and outputs of the instantiated block, *Keyin, clk, reset* and *D_Key* are mapped to the standard latch inputs and outputs *D, clk, reset* and *Q* respectively. This is illustrated in Figure 7b which shows the process S1 and the resulting latch 44.

If Depth > 1, for example if Depth = 2 (this means the Depth parameter begins at 0 and counts up to 2), the S1 process is used to create the first latch 44 in the array and the output, Q, is now mapped to A(0). Then the S2 process is used to create the other latches 44 that are required to complete the series of latches which, in the present example, is a further two latches 44. This is illustrated in Figure 7c which shows the processes S1 and S2 and the resulting series of three latches 44 (for Depth = 2).

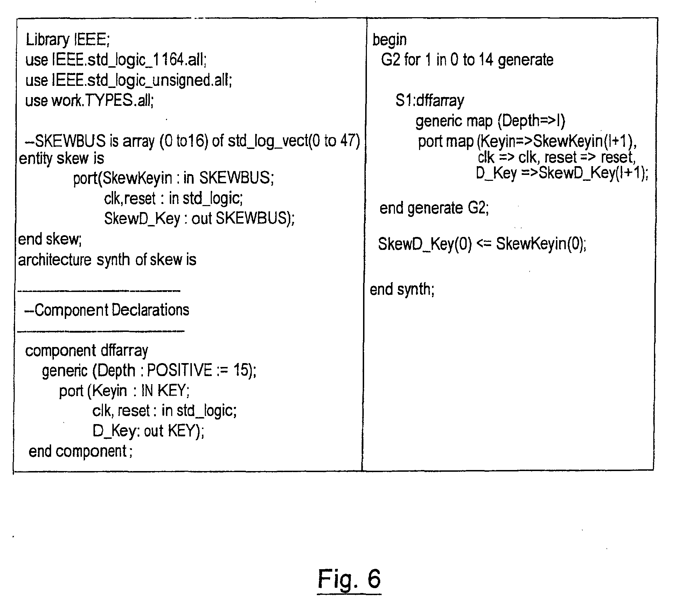

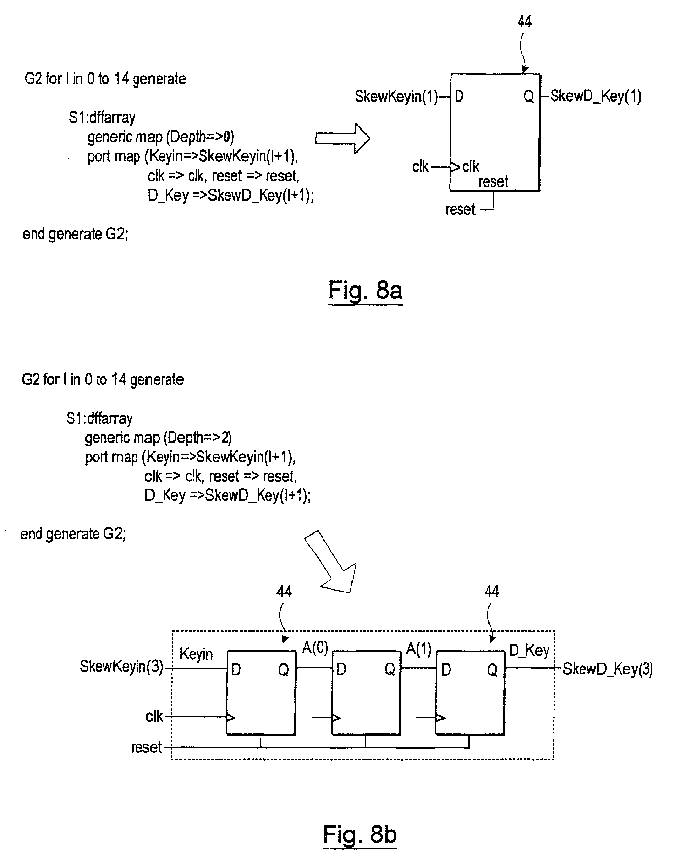

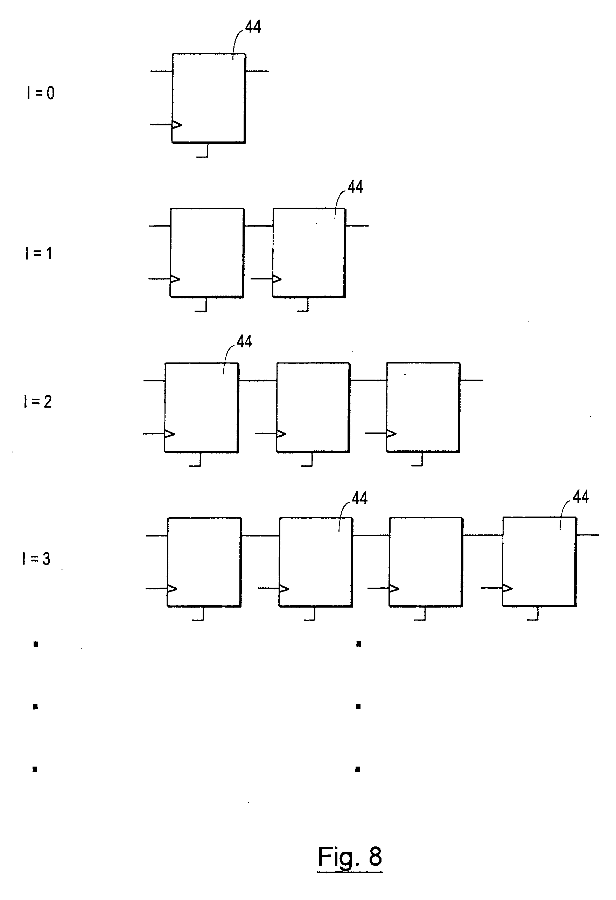

Suitable VHDL code for the *Skew* component is given in Figure 6. The *Skew* component generates an array of latches 44 in varying lengths. It uses, or instantiates, the *Dffarray* component to produce the required number of latches 44 for each round. In the case of the DES algorithm which consists of 16 rounds, the *Skew* component is set to loop 15 times (i.e. the parameter I counts from 0 to 14) since a latch 44 is not normally required to delay the first sub-key. In each loop, *Skew* uses *Dffarray* to generate a series of latches 44 of the required number for the round corresponding to that loop. As described above, the value of I also determines the *Depth* of the array to be generated by the *Dffarray* component. For example, when I = 0, one latch 44 is created. This is illustrated in Fig. 8a which shows a process G2 from *Skew* and a schematic representation of the latch 44 generated when I = 0. It will be seen that the inputs and outputs of the latch 44 are now mapped to *SkewKeyin(1), SkewD_Key(1), clk* and *reset.* Figure 8b illustrates process G2 and the corresponding series of latches 44 that are generated when I = 2.

Thus, the *Dffarray* and *Skew* components together generate an array of latches whose size depends on the value of parameter I. This is illustrated in Figure 9.

The sub-key permutation module 38 is also conveniently implemented using HDL declarations. This is particularly straightforward when implementing the permutation modules 39 required for DES. Since, for DES, each permutation module 39 is required to implement a simple re-arrangement of the 64 primary key bits into a 48-bit sub-key, this can be achieved by making assignment declarations in HDL. For example, if the first bit, *PK*_{*0*}*,* of the primary key is to become the tenth bit, *SK*_{*10*}*,* of a particular sub-key, then this can be achieved by the assignment declaration *SK*_{*10*} = *PK*_{*0*}. The 48-bit sub-keys are then assigned to a respective input *SkewKeyin()* of the sub-key skewing module 40 generated by *Skew* and *Dffarray* as described above.

The embodiment described herein in relation to a DES algorithm implementation is based on the Electronic Codebook (ECB) mode of DES. The invention is also suitable for use in implementations of Counter Mode. Counter Mode is a simplification of Output Feedback (OFB) mode and involves updating the input (plaintext) block as a counter Iⱼ₊₁ = Iⱼ₊₁ rather than using feedback. Hence the output (ciphertext) block, i, is not required in order to encrypt plaintext block, i+1.

By way of performance evaluation, an embodiment of the invention arranged for the implementation of a 16-stage pipelined DES architecture operates at an encryption rate of 3.8 Gbits/s when implemented using Xilinx Virtex FPGA technology. This rate is approximately nine times faster than implementations using existing techniques.

The present invention is described herein in the context of a data encryption apparatus for implementing the DES algorithm. It will be understood, however, that the invention is not limited to the implementation of the DES algorithm. Rather, the invention is suitable for use in the implementation of any data encryption algorithm that lends itself to pipelining, including fiestel-structured algorithms and substitution-permutation (SP) algorithms. The National Institute of Standards Technology (NIST) is currently seeking to specify an Advanced Encryption Standard (AES) to replace the DES algorithm. The candidate algorithms include MARS, RC6 and Twofish, which are fiestel-structured algorithms, and Rijndael and Serpent, which are substitution-permutation algorithms. The present invention is suitable for use in a pipelined implementation of any of these algorithms.

The present invention is not limited to the embodiment described herein which may be modified or varied without departing from the scope of the invention.

## Claims

1. A data encryption or decryption apparatus for encrypting or decrypting blocks of data, the data encryption apparatus comprising:
a data processing pipeline having at least two pipelined data processing modules each arranged to perform an encryption or decryption operation, in conjunction with a respective sub-key, on each data block input thereto;
a sub-key generating module arranged to receive a primary key and to generate from said primary key a respective sub-key for each data processing module;
a sub-key skewing module arranged to receive said sub-keys and to provide each sub-key to its respective data processing module,
wherein the sub-key skewing module is arranged to synchronise the provision of each sub-key to its respective data processing module with the passage of a data block through the data processing pipeline so that the data block is encrypted or decrypted using sub-keys generated from a common primary key.

2. An apparatus as claimed in Claim 1, wherein the sub-key skewing module comprises an array of delay elements arranged to delay the provision of the sub-keys to a respective processing module by an amount corresponding to the delay encountered by a data block in reaching each respective processing module.

3. An apparatus as claimed in claim 2, wherein the sub-key skewing module defines a respective data path for each sub-key, by which the respective sub-keys are provided to a respective processing module, wherein each data path includes a set of delay elements, the number of delay elements in the set corresponding with the number of data processing modules which precede the respective data processing module in the data processing pipeline.

4. An apparatus as claimed in Claim 2 or 3, wherein each delay element comprises a data latch.

5. An apparatus as claimed in any preceding claim, in which the sub-key generating module includes a respective hardwired circuit for generating each sub-key, each hardwired circuit being arranged to rearrange the order of at least some of the bits of the primary key to produce a respective primary key.

6. An apparatus as claimed in any preceding claim, wherein the data processing modules are arranged to perform encryption or decryption operations, and the sub-key generating module is arranged to generates sub-keys, in accordance with the Data Encryption Standard (DES).

7. A method of encrypting or decrypting blocks of data in a data encryption apparatus comprising a data processing pipeline having at least two pipelined data processing modules each arranged to perform an encryption or decryption operation, in conjunction with a respective sub-key, on each data block input thereto, the method comprising generating from said primary key a respective sub-key for each data processing block; providing each sub-key to its respective data processing module; and arranging to synchronise the provision of each sub-key to its respective data processing module with the passage of a data block through the data processing pipeline so that the data block is encrypted using sub-keys generated from a common primary key.

8. A computer usable product comprising computer usable instructions arranged to generate, when synthesised using hardware synthesis tools, a data encryption or decryption apparatus as claimed in Claim 1.

9. A computer program product comprising computer usable instructions arranged to generate, when synthesised using hardware synthesis tools, a data encryption or decryption apparatus for encrypting or decrypting blocks of data, the computer program product comprising computer usable instructions for generating:
a data processing pipeline having at least two pipelined data processing modules each arranged to perform an encryption or decryption operation, in conjunction with a respective sub-key, on each data block input thereto;
a sub-key generating module arranged to receive a primary key and to generate from said primary key a respective sub-key for each data processing module; and
a sub-key skewing module arranged to receive said sub-keys and to provide each sub-key to its respective data processing module,
and further comprising computer usable instructions for linking said data processing pipeline, said sub-key generating module and said sub-key skewing module so that the sub-key skewing module is arranged to synchronise the provision of each sub-key to its respective data processing module with the passage of a data block through the data processing pipeline so that the data block is encrypted or decrypted using sub-keys generated from a common primary key.

10. A computer program product as claimed in Claim 9, wherein the computer usable instructions for generating the sub-key skewing module include a first component comprising computer usable instructions for generating a series of data latches, the number of latches in the series depending on the value of a first parameter; and a second component arranged to instantiate said first component a plurality of times, the number of times depending on the value of said first parameter, wherein the value of the first parameter is determined by the number of data processing modules in the data processing pipeline.
